Europäisches Patentamt

European Patent Office

Office européen des brevets

(11) Veröffentlichungsnummer: **0 463 324 A2**

# EUROPÄISCHE PATENTANMELDUNG

(21) Anmeldenummer: **91107158.7**

(51) Int. Cl.5: **H04M 19/02**

(22) Anmeldetag: **03.05.91**

(30) Priorität: **26.06.90 DE 4020631 U**

(43) Veröffentlichungstag der Anmeldung:
**02.01.92 Patentblatt 92/01**

(84) Benannte Vertragsstaaten:
**DE ES FR GB IT**

(71) Anmelder: **Deutsche Telephonwerke und Kabelindustrie Aktiengesellschaft Wrangelstrasse 100 W-1000 Berlin 36(DE)**

(72) Erfinder: **Neuhaus, Hans-Jürgen Wilhelmshöher Strasse 10 W-1000 Berlin 41(DE)**

(54) **Schaltungsanordnung für Kommunikations-Endgeräte zum Schalten einer Weckerader von einem aktiven in einen passiven Zustand.**

(57) Für Kommunikations-Endgeräte wird eine elektronische Lösung zur automatischen Steuerung der Weckerader vorgeschlagen. Dazu wird in den Querzweig (plus/minus) eines zwischen einer Leitungsader und der Weckerader geschalteten Brückengleichrichters eine Transistorschaltung gelegt, die sich wie ein selbstzündender Thyristor verhält. Die Steuerung der Abschaltung der Weckerader wird mittels potentialfreier elektronischer Bauelemente realisiert.

FIG.1

Die Erfindung bezieht sich auf eine Schaltungsanordnung für Kommunikations-Endgeräte zum Schalten einer Weckerader von einem aktiven in einen passiven Zustand nach dem Belegen der Anschlußleitungen.

Bei Kommunikations-Endgeräten, die den Anschluß zum Beispiel von Zweitweckern über eine spezielle Weckerader gestatten oder deren Anschaltung an automatischen Wechselschaltern oder ähnlichen Zusatzeinrichtungen vorgesehen ist, ist es notwendig, die Weckerader bei Belegen der Anschlußleitungen zu unterbrechen. Hierzu ist bekannt, einen Kontakt der Gabelumschalteinrichtung zu verwenden.

Zur Realisierung einer Wahl bei aufgelegtem Handapparat, Freisprechen oder ähnlichen weiteren Leistungsmerkmalen werden hierfür Schalter mit aufwendigen mechanischen Rückstellvorrichtungen oder elektrische Lösungen, zum Beispiel Relais, verwendet (DE-PS 35 45 150). Die mechanischen Rückstelleinrichtungen unterliegen einem hohen Fertigungsaufwand und die elektrische Lösung erfordert einen relativ hohen Platzbedarf.

Der Erfindung lag die Aufgabe zugrunde, einen elektronisch gesteuerten Schalter für die Weckerader zu schaffen, der der mechanischen und/oder elektrischen Lösung hinsichtlich einer geringen Dämpfung der Rufwechselspannung im eingeschalteten Zustand und eines hohen Sperrwiderstandes bezüglich des ausgeschalteten Zustandes entspricht und der eine wirtschaftliche Alternative darstellt.

Diese Aufgabe ist durch die Erfindung gelöst, wie sie im Kennzeichnungsteil des ersten Patentanspruches dargelegt ist. Die Unteransprüche beschreiben weitere vorteilhafte Merkmale der Erfindung.

Anhand einer aus vier Figuren bestehenden Zeichnung wird die Erfindung nachfolgend näher erläutert. Darin zeigt die

Fig. 1   das Blockschaltbild eines Kommunikations-Endgerätes, die

Fig. 2   eine Schaltungsanordnung eines elektronisch gesteuerten Schalters für die Weckerader mittels Transistoren, die

Fig. 3   eine schaltungstechnische Lösung mittels eines Thyristors und die

Fig. 4   eine schaltungstechnische Lösung durch Einsatz eines bidirektionalen Thyristors (Triac).

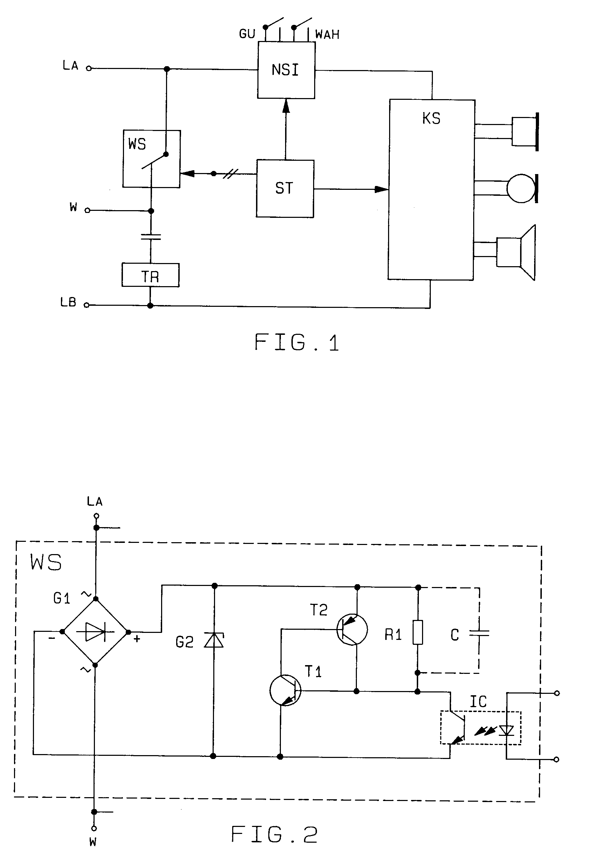

Im Blockschaltbild nach der Figur 1 sind die einzelnen Schaltungsmodule eines Kommunikations-Endgerätes dargestellt: der Impulsgeberschalter NSI dient der Impulsgabe bei der Wahl sowie der Flash-Funktion, der kurzzeitigen Unterbrechung der Fernsprechschleife. Der Impulsgeberschalter NSI kann außerdem durch geeignete Maßnahmen zum Belegen der Anschlußleitungen LA, LB mittels eines Gabelumschaltekontaktes GU oder eines Kontaktes WAH für die Wahl bei aufgelegtem Handapparat verwendet werden. Der Schalter für die Weckerader WS hat die Funktion, im Belegtzustand des Endgerätes die Verbindung von Weckerader W und Tonrufschaltung TR mit der Anschlußleitung LA zu trennen. Die Kommunikationsschaltung KS umfaßt die Sprechschaltung, Freisprecheinrichtung, Modem für z. B. Datenübermittlungen usw.

Ferner ist eine Ablaufsteuerung ST im Endgerät vorhanden, z. B. ein Mikroprozessor. Über diese Ablaufsteuerung ST wird der Schalter für die Weckerader WS gesteuert und der Impulsgeberschalter NSI in die jeweilige Betriebslage gesetzt.

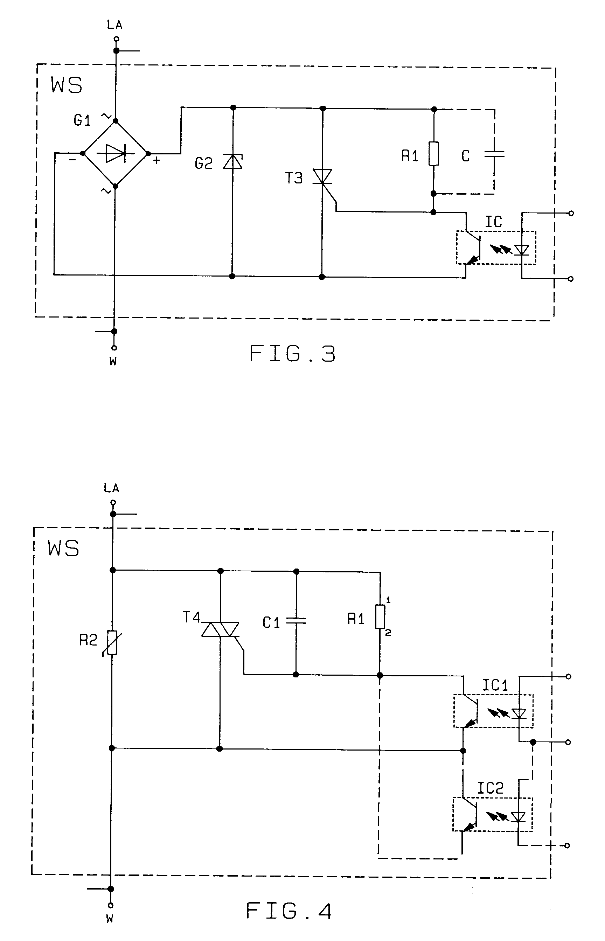

Die vorliegende Erfindung bezieht sich auf die schaltungstechnischen Ausführungen des Schalters für die Weckerader WS. Die Anordnung für den Schalter WS wird im einzelnen anhand der Figur 2 näher erläutert, wobei die Grundfunktionen auf die Ausführungen der Figuren 3 und 4 übertragbar sind. Die dargestellten Varianten des Schalters WS für die Weckerader nach den Figuren 2 bis 4 werden im Blockschaltbild der Figur 1 jeweils anstelle des dort gezeigten Schalters WS an den Punkten zur Leitungsader LA, zur Weckerader W und zur Steuerung ST eingeschleift.

Ein Teil der durch die Fernsprechvermittlungsstelle an die Leitungsadern LA und LB gelegten Rufwechselspannung wird durch die Brückenschaltung G1 zwischen der Leitungsader LA und der Weckerader W gleichgerichtet. Zwischen dem positiven und negativen Ausgang der Brückenschaltung G1 ist als Überspannungsschutz eine Diode G2, vorzugsweise eine Zenerdiode, geschaltet. Diese Diode G2 ist so dimensioniert, daß der Spitzenwert der bei Impulswahl bzw. Flashfunktion auftretenden Spannung (in der Regel kleiner gleich 60 V) nicht begrenzt wird. Die gleichgerichtete Spannung am Ausgang der Brückenschaltung G1 wird über einen Dimensionierungswiderstand R1 einerseits an die Basis und andererseits an den Emitter eines Komplementär-Transistors T1 geführt.

Zwischen Basis und Kollektor des Komplementär-Transistors T1 und der Kathode der Brückenschaltung G1 ist ein zweiter Komplementär-Transistor T2 geschaltet. Die Komplementär-Transistoren T1 und T2 sind schaltungsmäßig mitgekoppelt.

Erreicht der Basisstrom des Komplementär-Transistors T1 einen bestimmten Wert, so beginnt dieser zu leiten und steuert den zweiten Komplementär-Transistor T2 durch. Der Einschaltpunkt der Anordnung ist im wesentlichen abhängig von der Größe des Dimensionierungswiderstandes R1, von der Stromverstärkung der Komplementär-Transistoren T1 und T2 sowie von der zu schaltenden Last an der Weckerader W. Der Einschaltpunkt liegt bei einer Spannung von etwa 1,5 V, so daß nur ein geringer Phasenanschnitt der Rufwechselspannung in der Nähe deren Nulldurchganges gegeben ist. Im eingeschalteten Zustand ist der Spitzenwert des Spannungsabfalls der Gesamtanordnung dann nur etwa 2 V. Dies bedeutet eine Dämpfung der Rufwechselspannung um lediglich 1,4 V.

Die Anordnung wird selbsttätig nichtleitend geschaltet, wenn die Spannung an den Komplementär-Transistoren T1, T2 unter einen bestimmten Wert fällt. Im vorgenannten Beispiel unter etwa 0,6 V. Die Nichtleitung ist auch gezielt steuerbar durch Kurzschluß von Basis und Emitter eines der Komplementär-Transistoren T1 oder T2. Der Kurzschluß kann durch Einsatz eines Relaiskontaktes, eines Optokopplers, eines optisch gesteuerten Feldeffekttransistors (Optofet) oder ähnlicher Bauelemente gesteuert werden. Als Beispiel sind in den Figuren 2 bis 4 Optokoppler IG dargestellt. Der Strom, mit dem die Leuchtdiode des Optokopplers IG zu betreiben ist, ist abhängig vom Übersetzungsverhältnis des Optokopplers und vom Dimensionierungswiderstand R1. Da als Dimensionierungswiderstand R1 ein hochohmiger Widerstand verwendet wird, z. B. größer als 6 MOhm, sind auch die Leuchtdioden von Optokopplern mit niedrigem Übersetzungsverhältnis direkt über einen Ausgang des Mikroprozessors der Ablaufsteuerung ST betreibbar, wobei die Potentialtrennung durch den Optokoppler selbst erfolgt. Der Sperrwiderstand der Anordnung wird im wesentlichen durch die Größe des Dimensionierungswiderstandes R1 bestimmt.

Der Gleichstromsperrwiderstand kann durch Parallelschalten eines Kondensators C zum und durch Vergrößern des Dimensionierungswiderstandes R1 erhöht werden. Das Leitendschalten der Komplementär-Transistoranordnung T1, T2 wird dann durch den Kondensator C gesteuert. Der Wechselstromsperrwiderstand wird in diesem Fall durch den Wert des Kondensators C bestimmt. Der Dimensionierungswiderstand R1 dient dann ausschließlich dem Umladen des Kondensators C.

Die in Figur 2 dargestellte Transistorschaltung entspricht praktisch einem Ersatzschaltbild eines Thyristors. Somit ist anstelle zweier Komplementär-Transistoren T1, T2 unter bestimmten Voraussetzungen auch ein Thyristor T3 (Fig. 3) einsetzbar. Hierbei ist darauf zu achten, daß ein Thyristor T3 mit einem niedrigen Haltestrom gewählt wird.

Die Figur 4 zeigt eine weitere Möglichkeit eines elektronisch gesteuerten Schalters für die Weckerader WS durch den Einsatz eines Triacs T4 oder bidirektionalen Thyristors. Zum Zünden des Triacs T4 ist ein Kondensator C1 zwischen der Anschlußelektrode an der Leitungsader LA und dem Gate geschaltet, da bei entgegengesetzten Vorzeichen von Anoden- und Gatespannung des Triacs T4 größere Gateströme erforderlich sind. Durch die Verwendung eines Triacs T4 entfällt eine Gleichrichtung der Rufwechselspannung. Als Überspannungsschutz dient ein polungsunabhängiger Varistor R2, der zwischen Leitungsadernanschluß LA und Weckerader W geschaltet ist.

Das Übersetzungsverhältnis eines Optokopplers IC1 wird stark vermindert, wenn dessen Transistor jeweils bei Umpolung der Stromrichtung durch den Triac T4 im Inversbetrieb arbeitet. Damit sind zum Sperren der Anordnung durch den Optokoppler IC1 größere Ströme durch dessen Leuchtdiode erforderlich. Um diesen Nachteil, der eine direkte Steuerung des Optokopplers IC1 über einen Ausgang des Mikroprozessors der Ablaufsteuerung ST erschwert, auszugleichen, kann ein zweiter Optokoppler IC2 eingesetzt werden. Der Transistor des zweiten Optokopplers IC2 wird antiparallel zu dem Transistor des ersten Optokopplers IC1 geschaltet, bezogen auf die Anschlußpunkte von Emitter und Kollektor an der Weckerader W bzw. dem Gateanschluß des Triacs T4.

Die steuernden Leuchtdioden der Optokoppler IC1, IC2 werden in Reihe geschaltet, so daß kein größerer Strombedarf seitens der Steuerung besteht.

**Patentansprüche**

1. Schaltungsanordnung für Kommunikations-Endgeräte zum Schalten einer Weckerader von einem aktiven in einen passiven Zustand nach dem Belegen der Anschlußleitungen, gekennzeichnet durch

eine zwischen einer Leitungsader (LA) und der Weckerader (W) angeordnete Brückenschaltung (G1),
zwei Komplementär-Transistoren (T1, T2), die mit ihren Emittern und mit dem positiven und negativen Ausgang der Brückenschaltung (G1) verknüpft sind und deren Kollektoren mit der jeweiligen Basis des anderen Transistors verbunden sind,
einem zwischen dem Emitter des zweiten Transistors (T2) und der Basis des ersten Transistors (T1) geschalteten Dimensionierungswiderstandes (R1) und
ein zwischen der Basis und dem Emitter des einen Transistors (T1) geschalteten Bauelementes zum Sperren des Transistors (T1) durch Kurzschluß.

2. Schaltungsanordnung nach Anspruch 1, gekennzeichnet durch die Verwendung eines Thyristors (T3) statt zweier Komplementär-Transistoren (T1, T2).

3. Schaltungsanordnung nach Anspruch 1 und 2,

gekennzeichnet durch eine Überspannungsschutzdiode (G2), die parallel den Komplementär-Transistoren (T1, T2) bzw. dem Thyristor (T3) geschaltet ist.

4.  Schaltungsanordnung nach Anspruch 1, 2 und 3, gekennzeichnet durch die Verwendung eines Triacs (T4) und eines Varistors (R2) anstelle der Komplementär-Transistoren (T1, T2) bzw. des Thyrisotrs (T3), der Überspannungsschutzdiode (G2) und der Brückenschaltung (G1).

5.  Schaltungsanordnung nach Anspruch 1, gekennzeichnet durch einen Kondensator (C), der parallel dem Dimensionierungswiderstand (R1) geschaltet ist.

6.  Schaltungsanordnung nach Anspruch 1, gekennzeichnet durch den Einsatz eines Optokopplers als steuerndes Bauelement (IC).

7.  Schaltungsanordnung nach Anspruch 1, gekennzeichnet durch den Einsatz eines optischen Feldeffekttransistors als steuerndes Bauelement (IC)

8.  Schaltungsanordnung nach Anspruch 1, gekennzeichnet durch den Einsatz eines Relais als steuerndes Bauelement (IC).

9.  Schaltungsanordnung nach Anspruch 1, 4 und 6, gekennzeichnet durch den Einsatz zweier steuernder Bauelemente (IC1, IC2), deren Transistoren antiparallel geschaltet sind.

FIG.1

FIG.2

FIG.3

FIG.4